# EUROPEAN PATENT APPLICATION

(11) **EP 1 583 317 A1**
(43) Date of publication of application: **05.10.2005**
(21) Application number: 05102347.1
(22) Date of filing: 23.03.2005
(51) Int. Cl.: H04L 29/06, H04L 29/12, A63F 13/12, A63F 13/02

(54) **Wireless game controller with fast connect to a host**

(30) Priority: 31.03.2004 US 817762
(71) Applicant: MICROSOFT CORPORATION, Redmond, Washington 98052-6399 (US)
(72) Inventor: Gordon, Gary L., Redmond, Washington 98052 (US); Lum, Richard, Redmond, Washington 98052 (US); Guo, Wei, Redmond, Washington 98052 (US)
(74) Representative: Grünecker, Kinkeldey, Stockmair & Schwanhäusser Anwaltssozietät

(57) **Abstract**

A game controller operates in a wireless mode and is previously bound to a game console. To reestablish a wireless communication connection between the game controller and game console, the game console transmits its unique console identification that the game controller compares to a previously stored console identifier. The game controller in turn sends its unique controller identifier to the game console which compares it to a previously stored controller identifier. An adaptive frequency hopping technique is used to eliminate bad channels in a predetermined frequency hopping sequence.

## Description

### TECHNICAL FIELD

This invention relates to peripherals for controlling video games, and more particularly, to wireless game controllers that connect to a host.

### BACKGROUND

Game controllers facilitate user interaction with video games. Game controllers come in many configurations depending upon the desired gaming environment for which the controllers are to be used. There are multi-purpose controllers with one or more multi-function actuators for controlling a wide range of games and specialty controllers designed for specific genre of games, such as steering wheels for racing games, weapons for shooting games, and navigation sticks for aviation games.

Certain game controllers are designed to connect with game hosting systems and specifically to host game consoles or personal computers, using wireless technologies. Such wireless game controllers are designed to operate in a particular frequency spectrum that includes multiple channels that allow communication between the game controller and the game console.

### SUMMARY

A game controller operating in wireless mode reconnects to a host in a minimal amount of time. The game controller and host game console have previously been bound by an exchange of ID (identification) numbers. The game controller picks an arbitrary channel and waits for an ID packet to be sent from the game console. When the game controller recognizes the ID packet, connection takes place between the game controller and host game console where the host game console provides a list of good and bad channels along with a channel hopping sequence to the game controller.

### BRIEF DESCRIPTION OF THE CONTENTS

The detailed description is described with reference to the accompanying figures. In the figures, the left-most digit(s) of a reference number identifies the figure in which the reference number first appears. The use of the same reference numbers in different figures indicates similar or identical items.

Fig. 1 illustrates a gaming system with a host game console and a controller that quickly connects with one another.

Fig. 2 is a block diagram of the host game console.

Fig. 3 is a block diagram of the game controller.

Fig. 4 is a flow diagram showing a process for reestablishing a wireless communication connection between the game console and the game controller.

Fig. 5 is a flow diagram showing a process for adaptive frequency hopping used by the game console and game controller.

### DETAILED DESCRIPTION

The following disclosure describes a quick wireless reconnection between a game controller and a host game console. The game controller and host game console are previously bound by an exchange of ID (identifiers) that identifies the game controller to the host game console and the host game console to the game controller. The host game console performs scanning of the channels (i.e., frequencies) within a radio band of multiple channels to determine good and bad channels. Once an initial connection is made on a channel, the host game console provides the game controller a channel hopping sequence and communication (interaction) takes place between the game controller and host game console.

### Gaming System

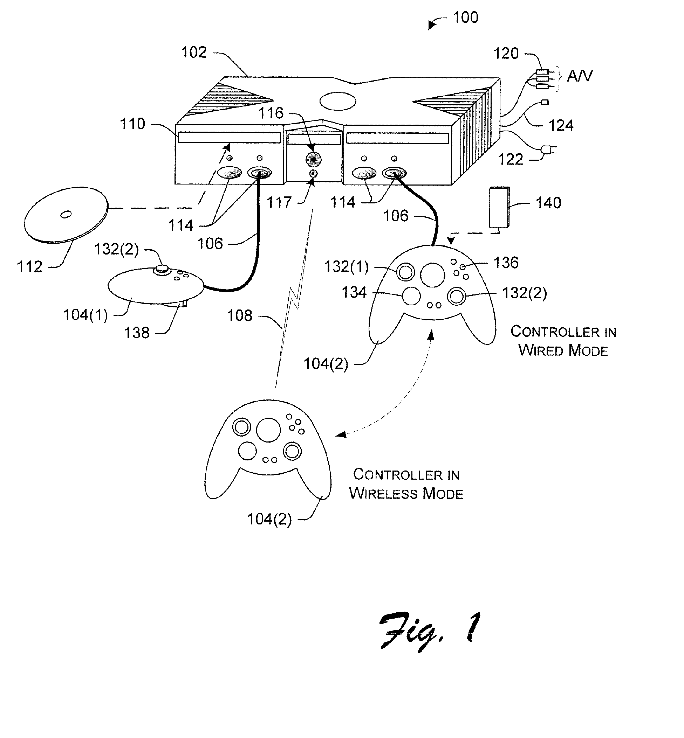

Fig. 1 shows an exemplary console-based gaming system 100. It includes a host game console 102 and up to four game controllers, as represented by two game controllers 104(1) and 104(2). In other embodiments host game console 102 may be a personal computer (PC). Each game controller 104 is coupled to the host game console 102 via a wire or wireless interface and utilizes a suitable data protocol, such as USB (Universal Serial Bus). One game controller 104(2) is illustrated as operating in two different modes: a wired mode and a wireless mode. In the wired mode, the game controller 104(2) is connected to the game console 102 via a cable 106. The game controller 104(2) derives power from the host game console 102 through the cable 106. In the wireless mode, the game controller 104(2) is connected to the host game console 102 via a wireless link 108. The cable 106 may be detached from the game controller 104(2) to permit greater freedom of movement.

The wireless link 108 may be implemented using an RF (radio frequency) technology that uses a particular frequency spectrum or radio band such as the 2.4 GHz ISM (Industrial, Scientific, Medical) radio band. The radio band includes multiple channels that allow game controller 104(2) to communicate with host game console 102. For example, the radio band may cover a 164 MHz frequency spectrum, where each channel covers a contiguous 4 Mhz frequency range. In this arrangement, the radio band provides for 41 channels.

When more than one game controller 104 operates in wireless mode, time division multiple access (TDMA) is employed to allocate a time slot for each game controller 104 to communicate with host game console 102. Therefore, only one game controller 104 communicates with host game console 102 at any given time, avoiding interference between the game controllers 104.

The game controllers 104 and host game console 102 make use of an adaptive frequency hopping (AFH) scheme that allows a predetermined hopping sequence between channels. Furthermore, the AFH scheme eliminates potential bad channels that may cause interference. The AFH scheme identifies a particular frequency hopping sequence and identifies good channels to use and potentially bad channels to avoid. The use of an AFH scheme is further discussed below. Host game console 102 has a unique frequency hopping sequence in order to avoid interference with other game consoles that are transmitting and receiving in close proximity.

The host game console 102 provides the game controllers 104 with its frequency hopping sequence so that both game controllers 104 and host game console 102 communicate using the same channel when frequency hopping is performed.

A player (i.e., user) can switch between wireless operation and wired operation by connecting the cable 106 to, or disconnecting it from, the host game console 102. Cable 106 provides serial communication between host game console 102 and game controller 104(2). Mode-switching may occur during game play without interrupting the game. For example, if a game controller is in wireless mode and the battery runs low during game play or significant interference prevents reliable wireless communication, the player may switch to wired mode by plugging the cable 106 into the host game console 102 and game play continues without interruption. While in wired mode, the game controller 104(2) is powered by the game console 106 and the game controller battery is recharged. The cable 106 attaches to and detaches from the game controller 104(2).

The host game console 102 is equipped with a portable media drive 110 and an optional internal hard disk drive. The portable media drive supports various forms of portable storage media as represented by an optical storage disc 112. Examples of suitable portable storage media include DVD, CD-ROM, game discs, game cartridges, and so forth.

The host game console 102 has four physical slots 114 on its front face to support and connect up to four game controllers, although the number and arrangement of slots may be modified. In the wired mode, the game controllers 104 are assigned to the physical slots 114 for controlling various characters/features of the video game. In wireless mode the game controllers 104(1)-104(2) are assigned to virtual slots.

In one implementation, virtual slots are assigned, without prompting the user, in sequential order to reduce complexity for the user. Thus, the first virtual slot is assigned to the first wireless game controller introduced to the host game console 102; the second virtual slot is assigned to the second wireless game controller, and so on. Alternatively, the user can choose a virtual slot via a user interface presented on the display. Actuation of a pre-designated button on the console invokes a slot assignment pane from which the player can select an available virtual slot.

Control buttons 116 are positioned on the front face of the game console 102. Control buttons 116 include, for example, a power button that switches power to the game console and an eject button that alternately opens and closes a tray of the portable media drive 110 to allow insertion and extraction of the storage disc 112. Control buttons 116 further include a binding button 117 that performs an exchange of IDs between game controllers 104 and host game console 102. The binding sequence is performed to initiate (i.e., bind) a game controller 104 to host game console 102.

The host game console 102 connects to a television or other display (not shown) via AN interfacing cables 120. A power cable 122 provides power to the game console. The host game console 102 may be further equipped with internal or externally added network capabilities, as represented by the cable or modem connector 124 to facilitate access to a network, such as a local area network (LAN) or the Internet.

Each game controller 104 may be equipped with any of a wide variety of user interaction mechanisms. As illustrated in Fig. 1, each game controller 104 is equipped with two thumbsticks 132(1) and 132(2), a directional or D-pad 134, surface buttons 136, and two triggers 138. These mechanisms are merely representative, and other known gaming mechanisms (e.g., shoulder buttons) may be substituted for or added to those shown in Fig. 1.

A memory unit (MU) 140 may be inserted into the game controller 104 to provide additional and portable storage (as illustrated) or alternatively into the host game console 102. Portable memory units enable users to store game parameters and transport them for play on other consoles. In the illustrated implementation, each game controller 104 is configured to accommodate two memory units 140, although more or less than two units may be employed in other implementations. In other implementations, the host game console 102 may support one or more memory units per player.

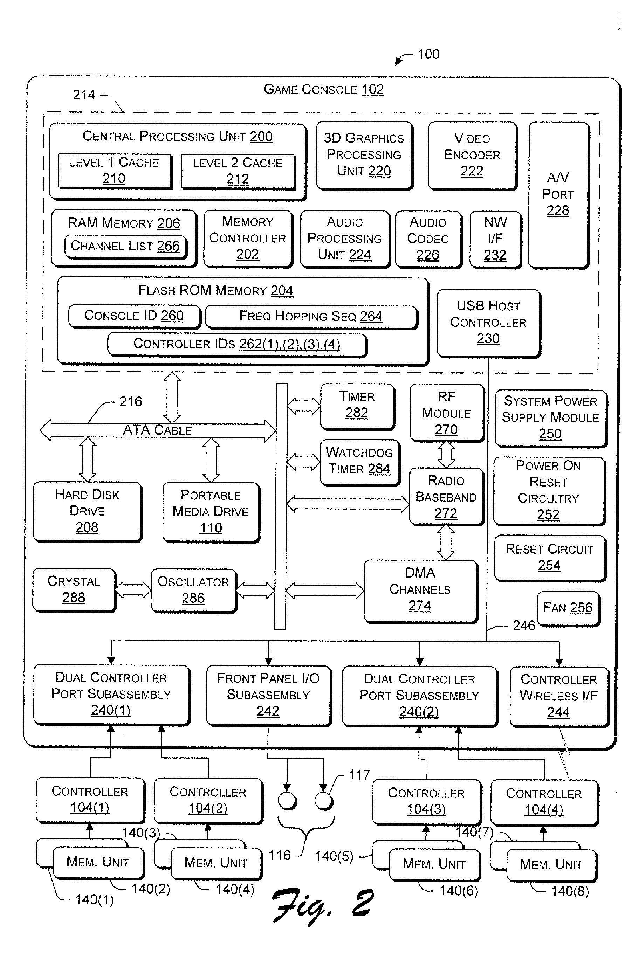

Fig. 2 shows functional components of the host game console 102 in more detail. The host game console 102 has a central processing unit (CPU) 200 and a memory controller 202 that facilitates processor access to various types of memory, including a flash ROM (Read Only Memory) 204, a RAM (Random Access Memory) 206, a hard disk drive 208, and the portable media drive 110. The CPU 200 is equipped with a level 1 cache 210 and a level 2 cache 212 to temporarily store data and hence reduce the number of memory access cycles, thereby improving processing speed and throughput.

The CPU 200, memory controller 202, and various memory devices are interconnected via one or more buses, including serial and parallel buses, a memory bus, a peripheral bus, and a processor or local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnect (PCI) bus.

As one suitable implementation, the CPU 200, memory controller 202, ROM 204, and RAM 206 are integrated onto a common module 214. ROM 204 is configured as a flash ROM that is connected to the memory controller 202 via a PCI (Peripheral Component Interconnect) bus and a ROM bus (neither of which are shown). RAM 206 is configured as multiple DDR SDRAM (Double Data Rate Synchronous Dynamic RAM) modules that are independently controlled by the memory controller 202 via separate buses (not shown). The hard disk drive 208 and portable media drive 110 are connected to the memory controller 202 via the PCI bus and an ATA (Advance Technology Attachment) bus 216.

A 3D graphics processing unit 220 and a video encoder 222 form a video processing pipeline for high speed and high resolution graphics processing. Data is carried from the graphics processing unit 220 to the video encoder 222 via a digital video bus (not shown). An audio processing unit 224 and an audio codec (coder/decoder) 226 form a corresponding audio processing pipeline with high fidelity and stereo processing. Audio data is carried between the audio processing unit 224 and the audio codec 226 via a communication link (not shown). The video and audio processing pipelines output data to an A/V (audio/video) port 228 for transmission to the television or other display. In the illustrated implementation, the video and audio processing components 220-228 are mounted on the module 214.

Also implemented on the module 214 are a USB host controller 230 and a network interface 232. The USB host controller 230 is coupled to the CPU 200 and the memory controller 202 via a bus (e.g., PCI bus) and serves as host for the peripheral controllers 104(1)-104(4). A network interface 232 provides access to a network (e.g., LAN, Internet, etc.) and may be any of a wide variety of various wired or wireless interface components including an Ethernet card, a modem, a Bluetooth module, a cable modem, and the like.

The host game console 102 has two dual controller support subassemblies 240(1) and 240(2), with each subassembly supporting up to two of the game controllers 104(1)-104(4). A front panel I/O subassembly 242 supports the functionality of the control buttons 116 including binding button 117, as well as any LEDs (light emitting diodes) or other indicators exposed on the outer surface of the game console. A controller wireless interface 244 is also provided to support wireless communication with the game controllers. The wireless interface 244 particularly uses RF technology. The subassemblies 240(1), 240(2), and 242 and controller wireless interface 244 are coupled to the module 214, and particularly the USB controller 230, via one or more cable assemblies 246.

Eight memory units 140(1)-140(8) are illustrated as being connectable to the four game controllers 104(1)-104(4), i.e., two memory units for each game controller. Each memory unit 140 offers additional storage on which games, game parameters, and other data may be stored. When inserted into a game controller, the memory unit 140 can be accessed by the memory controller 202. It is noted that, in other implementations, the memory units 140 may be inserted into compatible slots in the game console 102.

A system power supply module 250 provides power to the components of the gaming system 100 and to the game controllers 104 when operating in the wired mode. A power on reset circuitry 252 and reset circuit 254 allow the game console 102 to be reset during operation or when power is initially provided (i.e., the game console is turned on). A fan 256 cools the circuitry within the game console 102.

The game console 102 may further implement a cryptography engine to perform common cryptographic functions, such as encryption, decryption, authentication, digital signing, hashing, and the like. The cryptography engine may be implemented as part of the CPU 200, or in software stored in memory (e.g., ROM 204, hard disk drive 208) that executes on the CPU, so that the CPU is configured to perform the cryptographic functions.

A console ID (identification) 260 may be permanently stored in ROM memory 204. The value of console ID 260 is used to identify the console 102 to game controllers 104 when operating in wireless mode. The console ID 260 is unique to a particular console. The console ID 260 may be a 40 bit word number. One or all of controller IDs 262(1), 262(2), 262(3), and 262(4) may also be stored in ROM memory 204. Controller IDs 262(1), (2), (3), (4) are unique controller numbers and may be identified by a 40 bit word number. They are used to identify game controllers 104 that are bound (or not bound) to game console 102. A frequency hopping sequence 264 that is unique to each game console may also be stored in ROM memory 204. The frequency hopping sequence 264 defines which channels are accessed in a particular order by the game console 102 and game controllers 104.

A channel list 266 is stored in RAM memory 206. The channel list 266 describes the particular channels that are used (i.e., channels in the radio band) and which channels are determined by the game console to be good and potentially bad. The channel list 266 is continuously updated and changed as the game console performs scanning of channels. In other implementations, game controller 104 may perform scanning and identifying of good and potentially bad channels. In such implementations game controller may create the channel list 266.

In this particular embodiment, console ID 260, controller IDs 262(1), 262(2), 262(3), and 262(4) and frequency hopping sequence 264 are stored in ROM memory 205. Channel list 266 is stored in RAM memory 206. However, in other implementations they may be stored in other physical and logical memory devices of game console 102. For example, since channel list 266 is continuously updated, it may be stored in level 1 cache 210 or level 2 cache 212.

An RF module 270 (e.g., 2.4 GHz ISM module), a radio baseband unit 272, and DMA (Direct Memory Access) channels unit 274 support wireless connectivity to game controllers 104 and background scanning for good and potentially bad channels. The host game console 102 also has timing components to provide timing functionality, including a general purpose timer 282 (e.g., 16-bit timer), a watchdog timer 284, an oscillator 286, and a crystal 288.

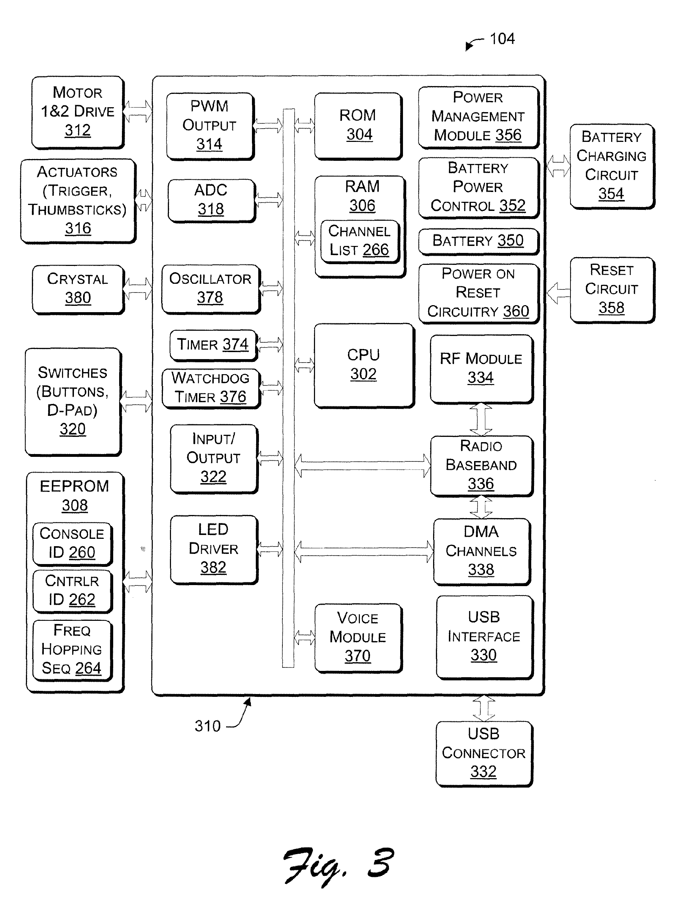

Fig. 3 shows functional components of the game controller 104 in more detail. The game controller 104 has a central processing unit (CPU) 302 and memory, including ROM 304, RAM 306 and EEPROM 308. In the illustrated implementation, the CPU 302, ROM 304, and RAM 306 are integrated onto a common module 310 and are interconnected via one or more bussing structures. EEPROM 308 is separate from, but interfaced with, the module 310.

The game controller 104 further includes motor drives 312 to provide tactile feedback to the player and a PWM (pulse width modulation) output 314 to provide the control signals for the motor drives. Player (i.e., user) actions received via variable-input actuators 316 (e.g., thumbsticks 132 and triggers 138) are converted by analog-to-digital converter (ADC) 318 to provide player input to the CPU 302. ADC 318 can be implemented, for example, as an eight channel 10-bit or 12-bit converter. Other player actions received through dual-state switches 320 (e.g., buttons 136 and D-pad 134) are passed through I/O 322 to CPU 302.

As noted above, the game controller 104 supports both wired operation and wireless operation. The game controller 104 includes a USB interface 330 and USB connector 332 for the wired mode of operation. In the illustrated implementation, the game controller 104 is configured to support wireless operation using RF technology. An RF module 334 (e.g., 2.4 GHz ISM module), a radio baseband unit 336, and DMA channels unit 338 support the wireless mode of operation.

The game controller 104 is equipped with its own power source to enable wireless operation. In the illustrated implementation, a battery 350 supplies power to the electronic modules and components of the game controller 104. A battery power controller 352 monitors the battery 350 and detects when power is low. Upon detection, a low power condition can be conveyed to the player (e.g., illumination of a light indicator on the game controller or display of a warning while the game is being played). The player can then switch to wired mode by plugging in the cable to the game console. The battery power controller 352 also monitors charging behavior of the battery 350, such as how long it takes to charge and detection of when it is fully charged. In wired mode, the game controller 104 receives power from the game console. A battery charging circuit 354 recharges battery 350 while the game controller is connected via the cable. A reset circuit 358 and power on reset circuitry 360 allow the game controller to be reset during operation or when power is initially provided. A power management module 356 generates voltages for the different components on the module 310 and dynamically manages power consumption of those components.

A voice module 370 may be optionally included in the game controller 104 to receive oral commands or speech from the player. The game controller 104 also has timing components to provide timing functionality, including a general purpose timer 374 (e.g., 16-bit timer), a watchdog timer 376, an oscillator 378, and a crystal 380. The game controller 104 further includes an LED driver 382 for one or more LEDs on the game controller 104 (e.g., surface buttons 136).

The controller ID 262 of the game controller 104 is permanently stored in EEPROM 308. EEPROM 308 also stores a value for console ID 260 that is received from and identifies a particular host game console (e.g., host game console 102) to which the game controller 104 is bound. The particular host game console further sends its unique frequency hopping sequence 264 that is stored in EEPROM 308. Channel list 266 is also sent from the particular host game console that describes good and potentially bad channels in the radio band. RAM 306 stores channel list 266. In particular implementations, game controller 104 performs scanning of channels and creates channel list 266, and may send it to a bound host game console.

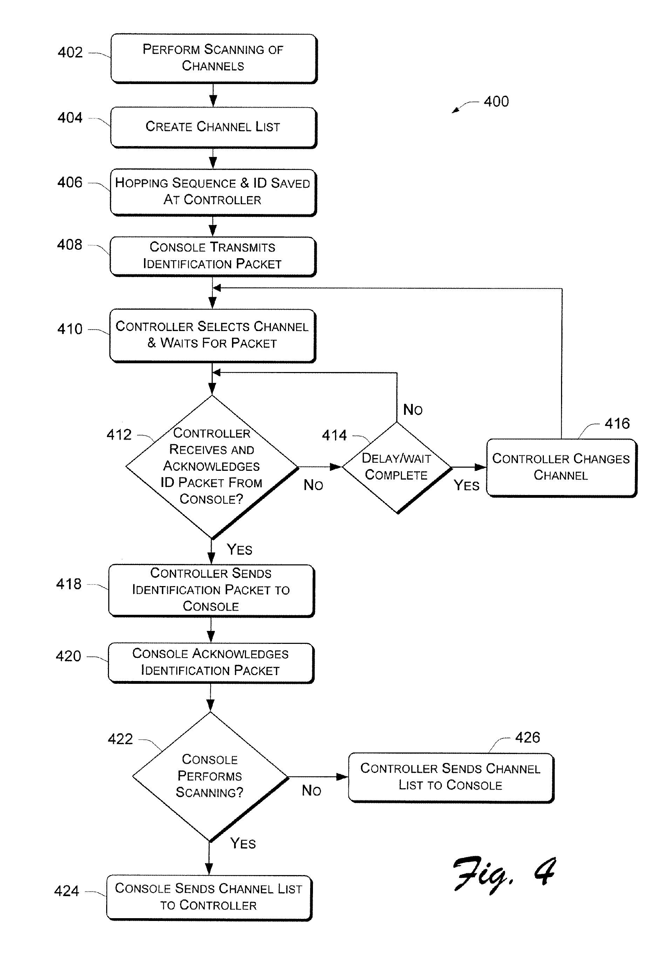

Fig. 4 shows a process 400 for establishing a wireless communication connection. The process 400 is illustrated as a collection of blocks in a logical flow graph, which represent a sequence of operations that can be implemented in hardware, software, or a combination thereof In the context of software, the blocks represent computer instructions that, when executed by one or more processors, perform the recited operations.

The process 400 includes operations performed by both the game controller and a host gaming system. For discussion purposes, the process 400 is described with reference to the game controller 104 and host game console 102 described above with respect to Figs. 1-3. It is noted that the process 400 may be implemented by other types of controllers that are designed for both wired and wireless communication, and for other types of gaming systems, such as PCs.

At block 402, the host game console 102 or game controller 104 performs a scanning of the channels of a particular radio band that is used to communicate wirelessly with one or more controllers 104. The scanning may be performed using one or more various known techniques such as RSSI (received signal strength indication) that identifies weak frequencies that are indicative of potentially bad channels, and PER (packet error rate) that identifies noise or unexpected signals received at particular frequencies and are indicative of potentially bad channels. Block 402 is continuously performed regardless of whether the host game console 102 and game controller 104 are communicating with one another.

At block 404, a channel list (e.g., channel list 266) is created. The channel list identifies the good and potentially bad channels as derived from the scanning of block 402. If 41 channels are used, a particular channel may be uniquely identified by a 6 bit word. A condition bit (i.e., 1 for good, 0 for bad) may be attached to each unique channel word that indicates whether to channel is good or potentially bad.

At block 406, the game controller 104 has saved a unique frequency hopping sequence and console ID of the host game console 102 from a previously binding session between the game controller 104 and host game console 102.

At block 408, the host game console 102 transmits an identification packet that includes its unique console ID 260. The identification packet may be transmitted using the unique frequency hopping sequence of host game console 102. Therefore, the identification channel may be transmitted on any particular channel in the unique frequency hopping sequence at any particular time.

At block 410, the game controller 104 chooses a random channel and waits at that channel to receive the identification packet from the host game console 102. The game controller 104 has the particular frequency hopping sequence of host game console 102 and console ID 260 identifying the host game console to which it is bound from a previous binding (block 406). If the received identification packet includes the same console ID in its memory, game controller 104 acknowledges the identification packet to the host game console 102.

If the game controller 104 is not able to receive and acknowledge the identification packet sent from the host game console 102 (i.e., following the "No" branch of block 412), several conditions may exist that prevent receipt of the identification packet, including out of range conditions. Typically, the game controller 104 is not on the same channel as the host game console 102. Since the host game console 102 is continuously changing (i.e., hopping) channels, the game controller 104 may merely wait for a period of time using the same channel until the host game console 102 transmits at that particular channel. In other instances, for example if the game controller 104 has waited for a relatively long time or if a predetermined delay or wait has been exceeded (i.e., following the "Yes" branch of block 414), the game controller 104 may switch to a different channel (i.e., perform block 410). After switching channels, the game controller 104 again waits to receive the identification packet form the host game console 102. Otherwise, game controller 104 may continue to wait until the delay is complete (i.e., following the "No" branch of block 414).

If the game controller 104 has received and acknowledged the identification packet (i.e., following the "Yes" branch of block 412), the game controller 104 sends its identification packet to the host game console 102 (block 418). This identification packet includes the unique controller ID 262 of game controller 104.

At block 420, the host game console 102 receives and acknowledges the identification packet from game controller 104. The host game console 102 will have previously stored controller IDs 262 in its memory (e.g., ROM memory 204) as described above. Controller IDs 262 describe which game controllers are bound to the host game console 102. If the received identification packet includes the one of the controller IDs (e.g., controller IDs 262(1)-(4)) in its memory, host game console 102 acknowledges the identification packet and the game controller 104.

It is contemplated that in most implementations scanning of channels is performed by the host game console 102; however, in other implementations the game controller 104 may perform scanning. Therefore a determination is made as to whether the host game console 102 is performing the scanning (block 422).

If the host game console 102 is not performing the scanning (i.e., following the "No" branch of block 422), the game controller 104 performs the scanning and creating the channel list, and sends the channel list to the host game console 102 (block 424).

If the host game console 102 performs the scanning (i.e., following the "Yes" branch of block 416), the host game console 102 sends the created channel list to the game controller 104 (block 426).

When the host game console 102 and game controller 104 have the created channel list, any channels that are identified as potentially bad are avoided (i.e., no transmission or reception is performed on the bad channels).

The host game console 102 has a unique frequency hopping sequence which hops between channels in a predetermined list, where such channels represent frequencies in the radio band as described above. Each frequency hopping sequence is particular to a host game console in order to avoid any potentially interference when one or more host game consoles are placed in close proximity to one another. At block 422, the host game console 102 sends its frequency hopping sequence to the game controller 104.

Host game console 102 and game controller 104 communicate by hopping between channels using the same frequency hopping sequence. Potentially bad channels in the radio band and the time in accessing such channels are avoided, by the host game console and game controller looking to the channel list for the potentially bad channels.

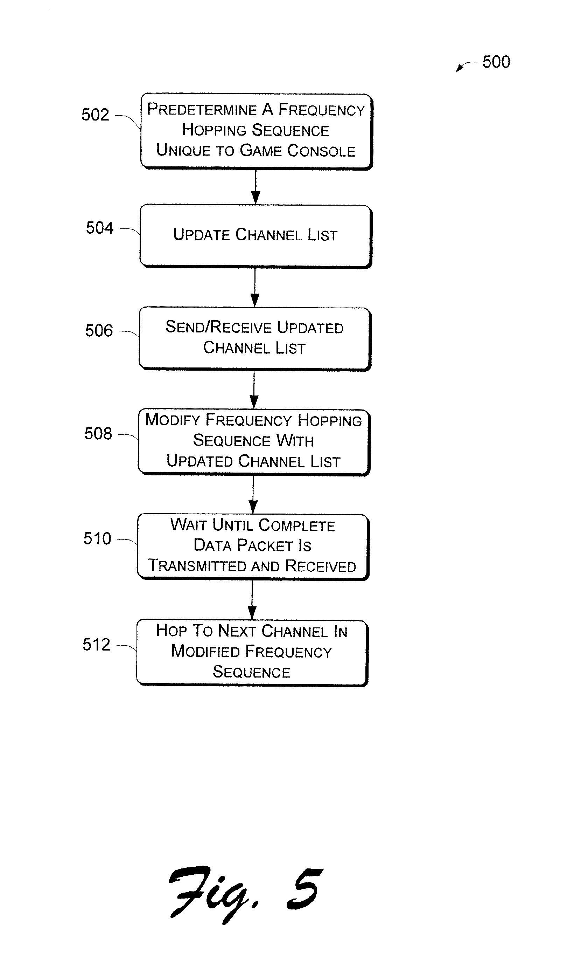

Fig. 5 shows a process 500 for adaptive frequency hopping At block 502, a predetermined frequency hopping sequence is assigned to the host game console 102. A number of frequency hopping sequences may be available based on the number of channels that are used to communicate within the radio band. The frequency hopping sequence lists the order in which the channels are used (i.e., hopped to). For example, if 41 channels are used, the 41 channels are listed in the order that they are accessed using the particular frequency hopping sequence of the host game console 102. The frequency hopping sequence is shared by the host game console 102 with the game controller 104 when a connection is reestablished between the two devices as described in process 400.

At block 504, either game controller 104 or host game console 102 updates the channel list (e.g., channel list 266), depending on whether the game controller 104 or host game console 102 is performing scanning. The channel list is updated as potentially bad channels are identified during scanning.

At block 506, the updated channel list is sent and received by host game console 102 and game controller 104. If host game console 102 is performing the scanning, it sends the updated channel list and game controller 104 receives the updated channel list. If game controller 104 is performing the scanning, it sends the updated channel list and host game console 102 receives the update channel list. The channel list may be sent and received as a separate packet, or it may be part of another packet that includes communication data.

At block 508, the frequency hopping sequence is modified. The list or sequence of channels as identified in the frequency hopping sequence is followed by the host game console 102 and game controller 104, with the exception that channels that are identified as potentially bad in the channel list are avoided. The channel list identifies the current communication environment (i.e., good and potentially bad channels) and the host game console 102 and game controller 104 adapt to the current communication environment.

At block 510, data packets are transmitted (i.e., sent) by host game console 102 and game controller 104. Such data packets include a channel list that may be included or separate from data packets that include communication information. Communication information, for example, may include player input from the game controller 104 to the host game console 102, and feedback from the host game console 102 to the game controller 104. The channel that is used by the game controller 104 and host game console 102 remains active until the data packet is transmitted and received. When the data packet has been sent and received successfully, hopping may occur to the next successive channel in the frequency hopping sequence (block 512).

### Conclusion

The above-described game system facilitates wireless connection between a host game console and one or more game controllers, quickly establishing and maintaining an efficient wireless communication connection. Although the invention has been described in language specific to structural features and/or methodological acts, it is to be understood that the invention defined in the appended claims is not necessarily limited to the specific features or acts described. Rather, the specific features and acts are disclosed as exemplary forms of implementing the claimed invention.

## Claims

1. A gaming system comprising:
a host to execute a video game; and
a game controller that establishes a wireless communication connection to the host by receiving a unique console identifier, ID, from the host and comparing the received console ID with a previously stored console ID in a memory of the game controller.

2. The gaming system as recited in claim 1, wherein the host and game controller are previously bound by the game controller sending a controller ID to the host and the host sending a console ID to game controller.

3. The gaming system as recited in claim 1, wherein the host comprises an RF module to scan for good and potentially bad channels in a radio band used for the wireless communication connection.

4. The gaming system as recited in claim 1, wherein the game controller comprises an RF Module to scan for good and potentially bad channels in a radio band used for the wireless communication connection.

5. The gaming system as recited in claim 1, wherein the game controller comprises a wireless interface to communicate with the host using an RF radio band comprising multiple channel frequencies.

6. The gaming system as recited in claim 5, wherein the receiving comprises the game controller wait at a particular channel frequency until the host transmits the unique console ID on the channel frequency.

7. The gaming system as recited in claim 1, wherein the host comprises:
a processor;
a RF module to scan for good and potentially bad channels in a radio band used for the wireless communication connection, wherein a channel list is created identifying the good and potentially bad channels; and
a memory coupled to the processor to store the unique console ID, the channel list, a frequency hopping sequence, and controller IDs of game controllers that are bound to the host.

8. The gaming system as recited in claim 7, wherein the channel list and frequency hopping sequence is sent to the game controller if the host identifies a received controller ID from the game controller with one of the controller IDs stored in the memory of the host.

9. The gaming system as recited in claim 1, wherein the host comprises one of a game console or a personal computer.

10. A game controller to wireless connect to a host when the game controller recognizes a console ID transmitted by the host and the host recognizes a controller ID transmitted by the game controller.

11. A game controller as recited in claim 10, embodied as a general-purpose controller with one or more multi-function actuators.

12. A game controller as recited in claim 10, comprising:
a RF module to receive the console ID and transmit a controller ID to the host;
a memory to store a previous console ID; and
a wireless interface to communicate with the host.

13. A host in a video gaming system comprising:
a processor;
an RF module to continuously scan for and identify good and potentially bad channels in a radio band used for wireless communication to a game controller, wherein the good and potentially bad channels are identified in a channel list; and
a memory used to store the channel list and a frequency hopping sequence, wherein potentially bad channels identified in the channel list are omitted in the frequency hopping sequence when the wireless communication takes place with the game controller.

14. A game controller comprising:
a processor;
an RF module to wirelessly communicate with a host in a gaming system, and to receive a frequency hopping sequence and a channel list of good and potentially bad channels from the host; and
a memory used to store the channel list and the frequency hopping sequence, wherein potentially bad channels identified in the channel list are omitted in the frequency hopping sequence when wireless communication takes place with the host.

15. A method of establishing a wireless communication connection between a host and a game controller comprising:
transmitting from the host a host identification packet;
receiving at the game controller the host identification packet;
determining at the game controller whether a host identifier contained in the host identification packet matches a previously stored host identifier;
sending a controller identification packet from the game controller to the host if the host identifier of the host identification packet matches the previously stored host identifier; and
acknowledging at the host the controller identification packet if a controller identifier in the controller identification packet matches a previously stored controller identifier.

16. The method as recited in claim 15, wherein the transmitting uses one of a number of channels in frequency hopping sequence unique to the host.

17. The method as recited in claim 15, wherein the receiving uses a random channel in a number of channels of an RF radio band used for the wireless communication such that the random channel is changed until the game controller is able to receive the first identification packet.

18. The method as recited in claim 15 further comprising scanning for good and potentially bad channels in a radio band comprising multiple channels used for the wireless communication connection.

19. The method of claim 18 wherein the scanning uses a received signal strength indication technique.

20. The method of claim 18 wherein the scanning uses a packet error rate technique.

21. The method of claim 18 wherein the scanning is performed by the host.

22. The method of claim 18 wherein the scanning is performed by the game controller.

23. The method of claim 18 further comprising creating a channel list from the scanning.

24. A storage medium for use with a gaming system, the storage medium having instructions that, when executed on the gaming system, performs acts comprising:
detecting when a host and game controller have been previously bound to one another;
establishing a wireless communication connection between the host and game controller; and
hopping through various channels using a unique frequency hopping sequence.

25. A storage medium as recited in claim 25, wherein the detecting comprises identifying console and controller identifiers unique to the host and game controller.

26. A storage medium as recited in claim 25, further having instructions that, when executed on the video game system, performs acts comprising:
scanning for good and bad channels; and
using only the good channels when hopping through the various channels in the unique frequency hopping sequence.
